# EUROPÄISCHE PATENTSCHRIFT

(11) **EP 2 562 460 B1**
(45) Veröffentlichungstag und Bekanntmachung des Hinweises auf die Patenterteilung: **09.11.2016**
(21) Anmeldenummer: 12005345.9
(22) Anmeldetag: 21.07.2012
(51) Int. Cl.: F16M 7/00, F16M 11/10, F16M 11/18, F16M 11/04

(54) **Einstellvorrichtung**
Dispositif de réglage
Setting device

(30) Priorität: 25.08.2011 DE 102011111174
(43) Veröffentlichungstag der Anmeldung: 27.02.2013
(73) Patentinhaber: KERN Microtechnik GmbH, 82438 Eschenlohe (DE)
(72) Erfinder: Fritz, Matthias, 82438 Eschenlohe (DE)
(74) Vertreter: Flosdorff, Jürgen

(56) Entgegenhaltungen:
- CA-A1- 2 621 679
- DE-A1- 3 100 595
- DE-A1- 19 809 490
- US-A1- 2010 050 457

## Beschreibung

Die Erfindung betrifft eine Einstellvorrichtung, mit der vorzugsweise die Höhenposition eines darauf angeordneten Bauteils einstellbar ist. Dabei ruht die Einstellvorrichtung auf einem festen Untergrund auf und ist in ihrer axialen Erstreckung so veränderbar, dass das auf der Einstellvorrichtung aufruhende Bauteil einen Hub nach oben oder unten ausführt. Die Einstellvorrichtung ist nicht nur in vertikaler Lage verwendbar, um die Höhenposition eines aufliegenden Bauteils einstellen zu können, sondern auch in schräger oder auch horizontaler Ausrichtung, beispielsweise um den Abstand zweier, beidseitig an der Einstellvorrichtung anliegender Bauteile einstellen bzw. verändern zu können. Die Einstellvorrichtung ist mit großem Vorteil bei Werkzeugmaschinen verwendbar, um die Ausrichtung von Achsträgern, Bearbeitungswerkzeugen, Werkzeug-spindeln und Werkstückträgern, einzustellen.

US 2010/050457 A1 offenbart eine Einstellvorrichtung mit einem Gewindelement, das ein erstes und ein zweites Gewinde aufweist, wobei die beiden Gewinde gleichlaufend sind, einem Basiselement, das ein Gegengewinde zu dem ersten Gewinde des Gewindeelementes aufweist und im Gewindeeingriff damit steht, wobei das Basiselement fixierbar ist, einem Verstellelement, das mit einem Gegengewinde zu dem zweiten Gewinde des Gewindeelementes versehen ist und im Gewindeeingriff damit steht, und mit einer Verdrehsicherung, die eine Drehung des Verstellelementes gegenüber dem Basiselement verhindert, wobei das Gewindeelement zwischen dem Basiselement und dem Verstellelement angeordnet ist und durch Drehen des Gewindeelementes das Verstellelement einen Hub gegenüber dem Basiselement ausführt. Bei dieser Einstellvorrichtung weisen die beiden Gewinde dieselbe Gewindesteigung auf. Als Verdrehsicherung sind Höcker an den im Gewindeeingriff stehenden Gewinden ausgebildet.

Der vorliegenden Erfindung liegt die Aufgabe zugrunde, eine Einstellvorrichtung anzugeben, mit der selbst bei großen Kräften kleine Hübe exakt eingestellt werden können.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die erfindungsgemäße Einstellvorrichtung besteht im wesentlichen aus vier Bauteilen, nämlich einem Gewindeelement, das zwischen einem Basiselement und einem Verstellelement angeordnet ist und im Gewindeeingriff mit diesen beiden Elementen steht, und eine Verdrehsicherung, die eine Drehung des Verstellelementes gegenüber dem Basiselement verhindert.

Das Gewindeelement hat ein erstes und ein zweites Gewinde, die gleichlaufend sind und unterschiedliche Gewindesteigungen aufweisen. Zweckmäßigerweise hat das Gewindeelement eine innen hohle Rohrform, und die beiden Gewinde befinden sich vorzugsweise an der Außenseite.

Das Basiselement hat ein Gegengewinde zu dem zugehörigen Gewinde des Gewindeelementes und steht im Gewindeeingriff mit diesem. Das Basiselement hat Mittel, mit denen es an einer Unterlage befestigbar ist, so dass sich das Basiselement weder drehen noch anheben lässt.

Das Verstellelement ist mit einem Gegengewinde zu dem anderen Gewinde des Gewindeelementes versehen und ist mit diesem verschraubt. Wenn das Gewindeelement in dem feststehenden Basiselement gedreht wird, wird es in dessen Gewinde - je nach Drehrichtung - nach oben oder unten geschraubt. Damit sich hierbei das Verstellelement nicht mit dreht, ist dieses durch die Verdrehsicherung an einer Drehung gegenüber dem Basiselement verhindert. Dies hat zur Folge, dass sich das drehende Gewindeelement - je nach Drehrichtung - entweder weiter in das Verstellelement einschraubt, oder aus diesem herausschraubt. Der Hub, den dabei das Verstellelement (das an dem in seiner Lage einzustellenden Bauteil anliegt) ausführt, hängt von den Gewindesteigungen der beiden Gewinde ab.

Wenn beispielsweise Standardgewinde M 0,4 und M 0,5 vorgesehen sind, und das Gewindeelement um eine Umdrehung gedreht wird, verändert sich der Abstand zwischen der Oberseite des Verstellelements und der Unterseite des Basiselements exakt um 100 µm. Dabei können natürlich beliebige andere Übersetzungen durch ausgewählte Gewindesteigungen vorgesehen sein.

Mit Vorteil ist vorgesehen, dass die beiden Gewinde des Gewindeelementes durch einen Bereich axial beabstandet sind, der Mittel zum drehenden Angriff bzw. Ergreifen eines Werkzeugs aufweist. Hierzu können in einer ringförmigen Vertiefung zwischen den beiden Gewindebereichen Aussparungen oder Vorsprünge angeordnet sein, an denen ein geeignetes zangenartiges Drehwerkzeug sicher angreifen kann.

Das Verstellelement hat in einer bevorzugten Ausführungsform einen mit einer Bodenwand versehenen hülsenförmigen Gewindeabschnitt mit einem Innengewinde und einen sich in derselben Richtung erstreckenden mittigen, kreiszylindrischen Ansatz, der von dem Gewindeabschnitt so beabstandet ist, dass das Gewindeelement in den Gewindeabschnitt einschraubbar ist. Der zylindrische Ansatz greift dabei in eine mittige kreiszylindrische Durchgangsbohrung des Gewindeelementes mit seitlichem Spiel ein, so dass der zylindrische Ansatz die relative Drehung zwischen dem Verstellelement und dem Gewindeelement nicht behindert. Der zylindrische Ansatz ragt mit seiner Stirnseite bevorzugt aus dem Gewindeelement heraus.

Das Basiselement hat ebenfalls eine Bodenwand mit daran angesetztem hülsenförmigen Gewindeabschnitt mit Innengewinde, wobei die Bodenwand den Gewindeabschnitt seitlich überragt und in dem überstehenden Randbereich bevorzugt Löcher zum Durchgriff von Befestigungsschrauben hat, mit denen das Basiselement an einer Unterlage festschraubbar ist.

Die Bodenwand des Basiselementes hat an der von den anderen Elementen abgewandten Unterseite eine Nut, deren Nutboden in dem Bereich offen ist, in dem sich der Innenraum des hülsenförmigen Gewindeabschnitts befindet. Die Verdrehsicherung ist erfindungsgemäß ein lang gestrecktes plattenförmiges Federelement, das in die Nut passt und an seinen seitlichen Enden in dem überstehenden Randbereich der Bodenwand am Nutboden festgeschraubt ist. Das Federelement, das vorzugsweise als Federblech ausgeführt ist, ist in seinem mittleren Bereich an der freien Stirnseite des Ansatzes des Verstellelementes befestigt, wozu das Federblech mit Löchern und der Ansatz des Verstellelementes mit Gewindebohrungen versehen ist.

Das Federelement liegt demnach nur mit seinen beiden Endabschnitten fest am Nutboden an, und es ist in dem nach oben offenen Bereich der Nut elastisch verformbar, so dass sich das Federblech zusammen mit dem Ansatz des Verstellelementes aufwärts und abwärts bewegen kann, wobei das Federblech jedoch eine Drehung des Verstellelementes verhindert. Das Federblech kann so ausgeführt werden, dass auf die Gewinde eine Vorspannkraft aufgebracht wird. Die Vorspannkraft kann dazu genutzt werden, das Spiel aus den Gewinden heraus zu nehmen. Je nach Einbaulage des Einstellelementes kann es sinnvoll sein, die Vorspannkraft in die eine oder andere Richtung wirken zu lassen. Die Vorspannkraft kann z.B. durch ein bereits vorverformtes Federblech erfolgen.

Das Basiselement und das Verstellelement bestehen vorzugsweise aus Stahl, während das Gewindeelement vorzugsweise aus Messing oder Bronze hergestellt ist. Die Erfindung ist aber auf diese Materialien nicht beschränkt.

Die erfindungsgemäße Einstellvorrichtung hat einen einfachen Aufbau, mit im wesentlichen nur vier Bauteilen, wenn von den Befestigungsschrauben abgesehen wird. Sie ermöglicht auf einfache Weise die exakte Einstellung kleiner Hübe selbst bei größeren Kräften von beispielsweise 1.000 N.

Eine Ausführungsform der Erfindung wird mit Bezug auf die beigefügten Zeichnungen in näheren Einzelheiten beschrieben. Dabei zeigen:
- Figur 1: eine Einstellvorrichtung in auseinander gezogener Darstellung und
- Figur 2: ein Anwendungsbeispiel in einer skizzenhaften Darstellung.

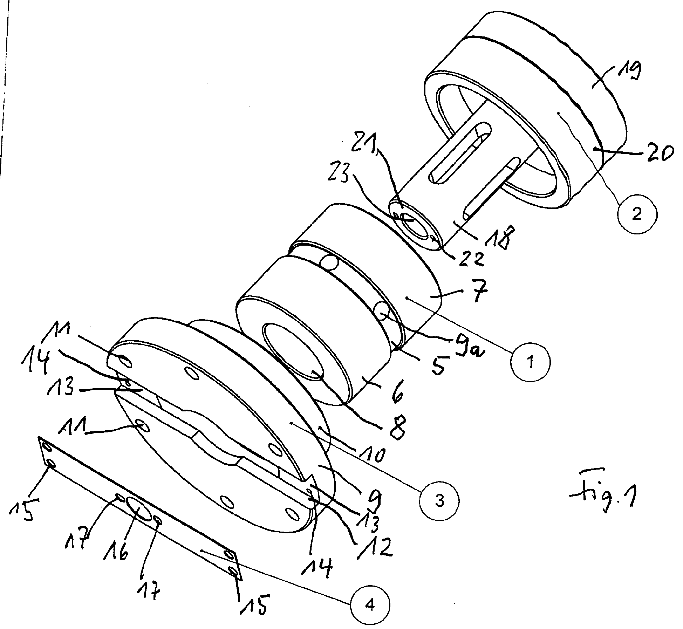

Figur 1 zeigt, dass die Einstellvorrichtung im wesentlichen aus einem Gewindeelement 1, einem Verstellelement 2, einem Basiselement 3 und einer Verdrehsicherung 4 besteht.

Das Gewindeelement 1 hat zwei durch eine Ringnut 5 beabstandete Gewinde 6,7 an seiner Außenseite und eine mittige kreiszylindrische Durchgangsbohrung 8. Im Boden der Ringnut 5 sind kreisrunde Vertiefungen oder Erhöhungen 9 ausgebildet, so dass das Gewindeelement 1 hieran von einem zangenförmigen Werkzeug ergriffen und gedreht werden kann.

Das Basielement 3 enthält eine kreisförmige Bodenwand 9 und einen daran angesetzten hülsenförmigen Abschnitt 10 mit einem Innengewinde, das das Gegengewinde zu dem Gewinde 6 des Gewindeelementes 1 ist, so dass dieses in den hülsenförmigen Abschnitt 10 einschraubbar ist. Die Bodenwand 9 hat einen größeren Außendurchmesser als der hülsenförmige Gewindeabschnitt 10, wobei in dem überstehenden Randbereich Löcher 11 für nicht dargestellte Schrauben ausgebildet sind, mit denen das Basielement 3 an einer Unterlage, beispielsweise einem Rahmenteil einer Werkzeugmaschine festschraubbar ist.

In der Bodenwand 9 ist eine mittig durchgehende Nut 12 ausgebildet, die nur im Bereich des über den hülsenförmigen Abschnitt 10 überstehenden Randes einen Nutboden 13 hat. Dazwischen ist die Nut 12 offen zu dem Innenraum des hülsenförmigen Abschnitts 10. In den beiden seitlichen Nutböden 13 befinden sich Gewindebohrungen 14 in die Schrauben einschraubbar sind, die Löcher 15 in den beiden seitlichen Enden der Verdrehsicherung 4 durchgreifen, um diese in der Nut 12 fest zuschrauben. Die Verdrehsicherung 4 ist ein Federblech, das in seinem mittigen Bereich neben einem größeren kreisrunden Fenster 16 beidseitig je ein Loch 17 für Schrauben hat, mit denen das Federblech 4 an einem mittigen Vorsprung 18 des Verstellelementes 2 anschraubbar ist.

Das Verstellelement 2 hat einen kreisrunden Boden 19 und einen daran angesetzten hülsenförmigen Abschnitt 20 gleichen Durchmessers, der ein Innengewinde hat, das ein Gegengewinde zu dem Gewinde 7 bildet, so dass das Verstellelement 2 auf das Gewindeelement 1 aufschraubbar ist. Der mittige Vorsprung 18 hat einen kleineren Außendurchmesser als der Durchmesser der kreiszylindrischen Bohrung 8 des Gewindeelements 1 und eine solche Länge, dass im zusammengesetzten Zustand der Einstellvorrichtung seine freie Stirnfläche 21 aus der Bohrung 8 des Gewindeelements 1 austritt, d.h. im gesamten Verstellbereich der Einstellvorrichtung aus der Bohrung 8 heraus ragt. Der Vorsprung 18 hat eine mittige axiale Bohrung 23 und beidseitig daneben ausgebildete Gewindebohrungen 22, die mit den Löchern 17 des Federblechs 4 fluchten, so dass das Federblech 4 an der Stirnseite 21 des Vorsprungs 18 anschraubbar ist. Da das Federblech 4 nur an den Randbereichen 14 der Bodenplatte 9 abgestützt ist, kann sich das Federblech 4 in dem dazwischenliegenden Bereich so elastisch verformen, dass es einem Hub des Verstellelements 2 jederzeit folgt und dabei verhindert, dass das Verstellelement 2 gegenüber dem Basiselement 3 gedreht wird.

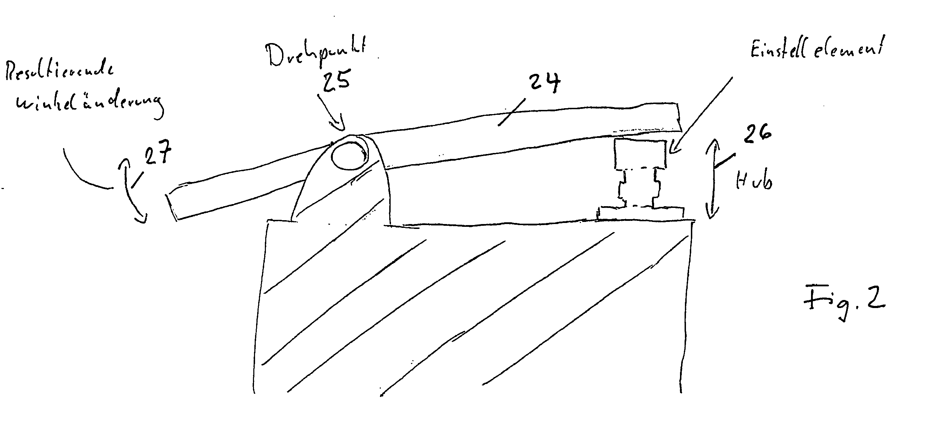

In der Darstellung der Figur 2 ist ein langgestrecktes Bauteil 24 beispielsweise auf einem Maschinenständer gelenkig gelagert (Drehpunkt 25) und liegt mit seinem dem Gelenk 25 gegenüber liegenden Endabschnitt auf einem Einstellelement auf, das auf die oben beschriebene Weise einen Hub (Pfeil 26) nach oben und unten ausführen kann, um einen durch einen Pfeil 27 angedeuteten Winkel einzustellen.

## Patentansprüche

1. Einstellvorrichtung, mit einem Gewindeelement (1), das ein erstes (6) und ein zweites (7) Gewinde aufweist, wobei die beiden Gewinde (6,7) gleichlaufend sind,
einem eine Bodenwand (9) aufweisenden Basiselement (3), das ein Gegengewinde zu dem ersten Gewinde (6) des Gewindeelementes (1) aufweist und im Gewindeeingriff damit steht, wobei das Basiselement (3) fixierbar ist,
einem Verstellelement (2), das mit einem Gegengewinde zu dem zweiten Gewinde (7) des Gewindeelementes (1) versehen ist und im Gewindeeingriff damit steht, und
einer Verdrehsicherung (4), die eine Drehung des Verstellelementes (2) gegenüber dem Basiselement (3) verhindert,
wobei das Gewindeelement (1) zwischen dem Basiselement (3) und dem Verstellelement (2) angeordnet ist und durch Drehen des Gewindeelementes (1) das Verstellelement (2) einen Hub (26) gegenüber dem Basiselement (3) ausführt,
**dadurch gekennzeichnet,**
**dass** die beiden Gewinde (6,7) unterschiedliche Gewindesteigungen aufweisen und
**dass** die Verdrehsicherung (4) ein lang gestrecktes plattenförmiges Federelement ist, das in eine Nut (12) in der Bodenwand (9) des Basiselements (3) passt und an seinen seitlichen Enden in einen überstehenden Randbereich der Bodenwand (9) am Nutboden (13) der Nut (12) festgeschraubt ist.

2. Einstellvorrichtung nach Anspruch 1,
**dadurch gekennzeichnet,**
**dass** das Gewindeelement (1) eine Rohrform hat und dass seine beiden Gewinde (6,7) Außengewinde sind.

3. Einstellvorrichtung nach einem der Ansprüche 1 oder 2,
**dadurch gekennzeichnet,**
**dass** die beiden Gewinde (6,7) durch einen Bereich (5) axial beabstandet sind, der Mittel (9) zum drehenden Angriff eines Werkzeugs aufweist.

4. Einstellvorrichtung nach einem der Ansprüche 1 bis 3,
**dadurch gekennzeichnet,**
**dass** das Verstellelement (2) einen mit einer Bodenwand (19) versehenen hülsenförmigen Gewindeabschnitt (26) und einen mittigen zylindrischen Ansatz (18) hat, der von dem Gewindeabschnitt (26) seitlich beabstandet ist und in eine mittige zylindrische Durchgangsbohrung (8) des Gewindeelementes (1) mit seitlichem Spiel eingreift.

5. Einstellvorrichtung nach Anspruch 4,
**dadurch gekennzeichnet,**
**dass** eine Stirnseite (21) des zylindrischen Ansatzes (18) aus dem Gewindeelement (1) herausragt.

6. Einstellvorrichtung nach einem der Ansprüche 1 bis 5, **dadurch gekennzeichnet,**
**dass** das Basiselement (3) die Bodenwand (9) mit daran angesetztem hülsenförmigen Gewindeabschnitt (10) aufweist, wobei die Bodenwand (9) den Gewindeabschnitt (10) seitlich überragt und die untere Nut (13) aufweist,
deren Nutboden im Bereich des Innenraums des hülsenförmigen Gewindeabschnitts (10) offen ist.

7. Einstellvorrichtung nach einem der Ansprüche 1 bis 6,
**dadurch gekennzeichnet,**
**dass** die Verdrehsicherung (4) ein Federelement aufweist, das an beiden seitlichen Enden am Nutboden (13) und mittig an der Stirnseite (21) des Ansatzes (18) des Verstellelementes (2) befestigt ist.

8. Einstellvorrichtung nach einem der Ansprüche 1 bis 7,
**dadurch gekennzeichnet,**
**dass** am Randbereich der Bodenwand (9) des Basiselementes (3) Löcher (14) zum Durchgriff von Befestigungsschrauben ausgebildet sind.

9. Einstellvorrichtung nach einem der Ansprüche 1 bis 8,
**dadurch gekennzeichnet,**
**dass** die Gewinde vorzugsweise Standardgewinde M 0,4 und M 0,5 sind.

10. Einstellvorrichtung nach einem der Ansprüche 1 bis 9,
**dadurch gekennzeichnet,**
**dass** das Basiselement (3) und das Verstellelement (5) vorzugsweise aus Stahl und das Gewindeelement (1) vorzugsweise aus Messing oder Bronze bestehen.

## Claims

1. An adjusting mechanism with a threaded element (1), which includes a first (6) and a second (7) screw thread, wherein the two screw threads (6, 7) are of the same sense, a base element (3), which includes a base wall (9) and includes a screw thread complementary to the first screw thread (6) of the threaded element (1) and is in threaded engagement therewith, wherein the base element (3) is fixable in position, an adjusting element (2), which is provided with a screw thread complementary to the second screw thread (7) of the threaded element (1) and is in threaded engagement therewith, and a rotary lock (4), which prevents rotation of the adjusting element (2) with respect to the base element (3), wherein the threaded element (1) is arranged between the base element (3) and the adjusting element (2) and, as a result of rotation of the threaded element (1), the adjusting element (2) performs a stroke (26) with respect to the base element (3), **characterised in that** the two screw threads (6, 7) have different thread pitches and that the rotary lock (4) is an elongate, plate-shaped spring element, which fits into a groove (12) in the base wall (9) of the base element (3) and is firmly screwed at its lateral ends into a projecting edge region of the base wall (9) on the groove base (13) of the groove (12).

2. An adjusting mechanism as claimed in Claim 1, **characterised in that** the threaded element (1) has a tubular shape and that its two screw threads (6, 7) are external screw threads.

3. An adjusting mechanism as claimed in one of Claims 1 or 2, **characterised in that** the two screw threads (6, 7) are axially spaced apart by a region (5), which includes means (9) for the rotating application of a tool.

4. An adjusting mechanism as claimed in one of Claims 1 to 3, **characterised in that** the adjusting element (2) has a sleeve-shaped threaded section (26) provided with a base wall (19) and a central, cylindrical projection (18), which is laterally spaced from the threaded section (26) and engages into a central, cylindrical through bore (8) in the threaded element (1) with lateral clearance.

5. An adjusting mechanism as claimed in Claim 4, **characterised in that** an end face (21) of the cylindrical projection (18) projects out of the threaded element (1).

6. An adjusting mechanism as claimed in one of Claims 1 to 5, **characterised in that** the base element (3) includes the base wall (9) with a sleeve-shaped threaded section (10) attached thereto, wherein the base wall (9) projects laterally beyond the threaded section (10) and includes the lower groove (13), the groove base of which is open in the region of the interior of the sleeve-shaped threaded section (10).

7. An adjusting mechanism as claimed in one of Claims 1 to 6, **characterised in that** the rotary lock (4) includes a spring element which is fastened at both lateral ends to the groove base (13) and centrally to the end face (21) of the projection (18) on the adjusting element (2).

8. An adjusting mechanism as claimed in one of Claims 1 to 7, **characterised in that** holes (14) for the passage of fastening screws are formed at the edge region of the base wall (9) of the base element (3).

9. An adjusting mechanism as claimed in one of Claims 1 to 8, **characterised in that** the screw threads are preferably standard screw threads M 0.4 and M 0.5.

10. An adjusting mechanism as claimed in one of Claims 1 to 9, **characterised in that** the base element (3) and the adjusting element (5) consist preferably of steel and the threaded element (1) consists preferably of brass or bronze.

## Revendications

1. Dispositif de réglage comprenant un élément fileté (1), qui présente un premier filetage (6) et un deuxième filetage (7), dans lequel les deux filetages (6, 7) sont de même sens,
un élément de base (3) présentant une paroi de fond (9), lequel présente un filetage complémentaire par rapport au premier filetage (6) de l'élément fileté (1) et qui se trouve en prise par filetage avec ce dernier, dans lequel l'élément de base (3) peut être fixé,
un élément d'ajustement (2), qui est pourvu d'un filetage complémentaire par rapport au deuxième filetage (7) de l'élément fileté (1) et qui se trouve en prise par filetage avec ce dernier, et
un blocage en torsion (4), qui empêche toute rotation de l'élément d'ajustement (2) par rapport à l'élément de base (3),
dans lequel l'élément fileté (1) est disposé entre l'élément de base (3) et l'élément d'ajustement (2) et l'élément d'ajustement (2) exécute une course (26) par rapport à l'élément de base (3) par la rotation de l'élément fileté (1),
**caractérisé en ce**
**que** les deux filetages (6, 7) présentent des pas de filetage différents, et
**que** le blocage en rotation (4) est un élément de ressort en forme de plaque étiré en longueur, qui passe dans une rainure (12) dans la paroi de fond (9) de l'élément de base (3) et qui est fixé par vissage, au niveau de ses extrémités latérales, dans une zone de bord à débord de la paroi de fond (9) au niveau du fond de rainure (13) de la rainure (12).

2. Dispositif de réglage selon la revendication 1, **caractérisé en ce**
**que** l'élément fileté (1) a une forme tubulaire, et
**que** ses deux filetages (6, 7) sont des filetages extérieurs.

3. Dispositif de réglage selon l'une quelconque des revendications 1 ou 2,
**caractérisé en ce**
**que** les deux filetages (6, 7) sont tenus à distance de manière axiale par une zone (5), qui présente des moyens (9) pour s'engager par rotation avec un outil.

4. Dispositif de réglage selon l'une quelconque des revendications 1 à 3,
**caractérisé en ce**
**que** l'élément d'ajustement (2) a une section filetée (26) présentant une forme de douille pourvue d'une paroi de fond (19) et un appendice (18) central cylindrique, qui est tenu à distance de manière latérale de la section filetée (26) et qui vient en prise, avec un jeu latéral, avec un alésage de passage (8) central cylindrique de l'élément fileté (1).

5. Dispositif de réglage selon la revendication 4,
**caractérisé en ce**
**qu'**un côté frontal (21) de l'appendice (18) cylindrique dépasse de l'élément fileté (1).

6. Dispositif de réglage selon l'une quelconque des revendications 1 à 5,
**caractérisé en ce**
**que** l'élément de base (3) présente la paroi de fond (9) pourvue d'une section filetée (10) en forme de douille placée au niveau de cette dernière, dans lequel la paroi de fond (9) de la section filetée (10) dépasse de manière latérale et présente la rainure (13) inférieure, dont le fond de rainure est ouvert dans la zone de l'espace intérieur de la section filetée (10) présentant une forme de douille.

7. Dispositif de réglage selon l'une quelconque des revendications 1 à 6,
**caractérisé en ce**
**que** le blocage de torsion (4) présente un élément de ressort, qui est fixé, au niveau des deux extrémités latérales, au niveau du fond de rainure (13) et au centre au niveau du côté frontal (21) de l'appendice (18) de l'élément d'ajustement (2).

8. Dispositif de réglage selon l'une quelconque des revendications 1 à 7,
**caractérisé en ce**
**que** des trous (14) servant au passage de vis de fixation sont réalisés au niveau de la zone de bord de la paroi de fond (9) de l'élément de base (3).

9. Dispositif de réglage selon l'une quelconque des revendications 1 à 8,
**caractérisé en ce**
**que** les filetages sont de préférence des filetages standard M 0,4 et M 0,5.

10. Dispositif de réglage selon l'une quelconque des revendications 1 à 9,
**caractérisé en ce**
**que** l'élément de base (3) et l'élément d'ajustement (5) sont constitués de préférence d'acier, et en ce que l'élément fileté (1) est constitué de préférence de laiton ou de bronze.
